# NEUE EUROPÄISCHE PATENTSCHRIFT

(11) **EP 1 029 588 B2**
(45) Veröffentlichungstag und Bekanntmachung des Hinweises auf die Entscheidung über den Einspruch: **05.09.2007**
(45) Hinweis auf die Patenterteilung: 02.06.2004
(21) Anmeldenummer: 00810029.9
(22) Anmeldetag: 13.01.2000
(51) Int. Cl.: B01J 19/32

(54) **Füllkörper mit Kreuzkanalstruktur**
Packing element with cross-channel structure
Element de garnissage ondulé-croisé

(30) Priorität: 12.02.1999 EP 99810130
(43) Veröffentlichungstag der Anmeldung: 23.08.2000
(73) Patentinhaber: Sulzer Chemtech AG, 8404 Winterthur (CH)
(72) Erfinder: Kessler, Alwin, 9546 Tuttwil (CH)
(74) Vertreter: Sulzer Management AG

(56) Entgegenhaltungen:
- EP-A- 0 129 272
- WO-A-87/01302
- DE-A- 1 501 375
- DE-A- 2 942 481
- US-A- 4 710 326
- US-A- 5 578 254

## Beschreibung

Die Erfindung betrifft einen Füllkörper mit Kreuzkanalstruktur gemäss Oberbegriff von Anspruch 1, eine Kolonne mit einem solchen Füllkörper als Packung sowie eine Mischeinrichtung mit einem solchen Füllkörper als statische Mischerstruktur.

Aus der WO 87/01302 ist ein gattungsgemässer Füllkörper bekannt, dessen Lagen jeweils aus einem Blech mit rasterartig angeordneten sowie sichelförmigen Schlitzen gebildet sind, wobei konvexe Kanten der Schlitze im Füllkörper die Funktion von Abtropfkanten haben.

Aus der CH-A 547 120 ist eine Mischeinrichtung für Fluide bekannt, bei der statische Mischerelemente in einem Rohr eingebaut sind. Ein solches Einbauelement besteht aus einander berührenden Lagen, die mit teilweise offenen Strömungskanälen eine Kreuzkanalstruktur bilden. Aus der DE-A 26 01 890 ist ein Packungskörper für Kolonnen bekannt, der ebenfalls eine Kreuzkanalstruktur aufweist. Mit einer solchen Kolonnenpackung ist ein Stoff- und/oder Wärmetausch durchführbar und zwar zwischen a) einem Medium auf Oberflächen der Packung, insbesondere einem Rieselfilm und/oder einer katalytisch wirksamen Beschichtung, und b) einem Gasstrom, der die durch die Packungsoberflächen gebildeten Kanäle durchströmt.

Durchströmt ein Fluid die sich offen kreuzenden Kanäle, so ergibt sich an den Grenzflächen zwischen benachbarten Lagen eine Wechselwirkung zwischen den Fluiden, bei der ein Impulsaustausch stattfindet. Aufgrund dieses Impulsaustausches entstehen in den Kanälen Wirbel jeweils in Form eines Wirbelzopfs (translativer Fluidstrom mit überlagerter Rotation), dessen Wirbelkern sich in Kanalrichtung erstreckt. Diese Wirbelzöpfe induzieren weitere sekundäre Wirbel. Die treibenden Kräfte der Wirbelzöpfe, die durch den Impulsaustausch gegeben sind, stellen sich so ein, dass die Wirbel entgegen der Einwirkung von Reibkräften in stationären Zuständen aufrecht erhalten bleiben. Die Wirbel fördern eine Durchmischung des Fluids, einerseits durch einen Stoffaustausch zwischen benachbarten Kanälen und andererseits durch einen Stoffaustausch zwischen Grenzschichten und Innenräumen der Kanäle. Da die Kanäle geneigt sind, wird das Fluid bezüglich Temperatur und Konzentrationen über den Querschnitt des Füllkörpers homogenisiert; dies allerdings lediglich in Richtung der Lagen. Die Homogenisierungs- und Mischeffekte werden mit einer Energiedissipation erkauft, die sich als zusätzlicher Strömungswiderstand (oder Druckabfall) bemerkbar macht.

Aufgabe der Erfindung ist es, Füllkörper mit Kreuzkanalstruktur zu schaffen, bei welchen einerseits keine Rasterung mit sichelförmigen Schlitzen wie in der WO 87/01302 vorgesehen ist. Denn eine Ausbildung, von Abtropfkanten durch konvexe Schlüzkanten wird als nachteilig erachtet. Andererseits sollverglichen mit den Verhältnissen bei den weiteren bekannten Füllkörpern mit Kreuzkanalstruktur - bei den zu schaffenden Füllkörpern der Strömungswiderstand kleiner sein, wobei aber die Trennleistung einer Stoffaustauschkolonne bzw. die Mischwirkung eines statischen Mischers weitgehend gleich gut bleiben sollen. Es sollen sich also die erwünschten Homogenisierungs- und Mischeffekte bei einer reduzierten Energiedissipation einstellen. Diese Aufgabe wird durch Füllkörper gelöst, wie sie in Anspruch 1 definiert ist.

Der Füllkörper mit Kreuzkanalstruktur ist für eine Packungskolonne oder eine statische Mischeinrichtung vorgesehen. Er ist aus aneinander grenzenden Lagen aufgebaut, in denen jeweils Kanäle parallel zueinander angeordnet sind. An Grenzflächen zwischen benachbarten Lagen erstrecken sich laterale Kanäle, die gegeneinander offen sind. Diese lateralen Kanäle bilden eine kreuzweise Anordnung. Zumindest ein Teil der Lagen enthalten zusätzlich zu den lateralen Kanälen jeweils zentrale Kanäle. Eine materielle Trennung an den Grenzen zwischen den zentralen und lateralen Kanälen ist zu rund einer Hälfte mit regelmässig angeordneten Wandstücken hergestellt; in den Zonen der anderen Hälfte sind die Kanalgrenzen offen.

Die Lagen des erfindungsgemässen Füllkörpers umfassen neben lateralen Kanälen zusätzlich zentrale Kanäle, die nur teilweise durch Wände von den lateralen Kanälen abgegrenzt sind. Die lateralen Kanäle entsprechen den Kanälen der bekannten Kreuzkanalstruktur, bei der die parallelen Kanäle jeweils derselben Lage über ihre ganze Länge durch Wände separiert sind. In den lateralen Kanälen werden - wie schon bei der bekannten Kreuzkanalstruktur - durch die genannte Wechselwirkung zwischen benachbarten Lagen primäre Wirbelzöpfe angetrieben. Diese primären Wirbelzöpfe induzieren in den zentralen Kanälen sekundäre Wirbelzöpfe. Dank den zentralen Kanälen wird bei weitgehend gleich grosser Energiedissipation eine Mischwirkung in einem grösseren Volumen erzielt. Da die einzelnen Lagen - anders als bei der bekannten Kreuzkanalstruktur - eine grosse Durchlässigkeit zwischen den lateralen Kanälen beider Seiten aufweisen, ergibt sich zusätzlich eine Homogenisierung, die senkrecht zur Richtung der Lagen erfolgt.

Die abhängigen Ansprüche 2 bis 6 beziehen sich auf vorteilhafte Ausführungsformen des erfindungsgemässen Füllkörpers. Gegenstände der Ansprüche 7 bis 9 sind eine Kolonne und eine Mischeinrichtung mit solchen Füllkörpern.

Nachfolgend wird die Erfindung anhand der Zeichnungen erläutert. Es zeigen:
- Fig. 1: eine Draufsicht auf eine Lage des erfindungsgemässen Füllkörpers,
- Fig. 2, 3: zwei Querschnitte durch die Lage der Fig. 1,
- Fig. 4: eine Schrägbilddarstellung derselben Lage,
- Fig. 5: eine schematische Darstellung zu den Strömungsverhältnissen im erfindungsgemässen Füllkörper,
- Fig. 6: eine besonders vorteilhafte Geometrie der Füllkörperlage,
- Fig. 7, 8: eine weitere Ausführungsform in einer den Figuren 1 und 2 entsprechenden Darstellung,
- Fig. 9: einen Variante zur Lage der Fig. 8,
- Fig. 10: eine Detaildarstellung zu einer Lage des in Fig. 6 gezeigten Typs und
- Fig. 11: eine schematische Darstellung zu einer Kolonne oder einem statischen Mischer mit einem erfindungsgemässen Füllkörper.

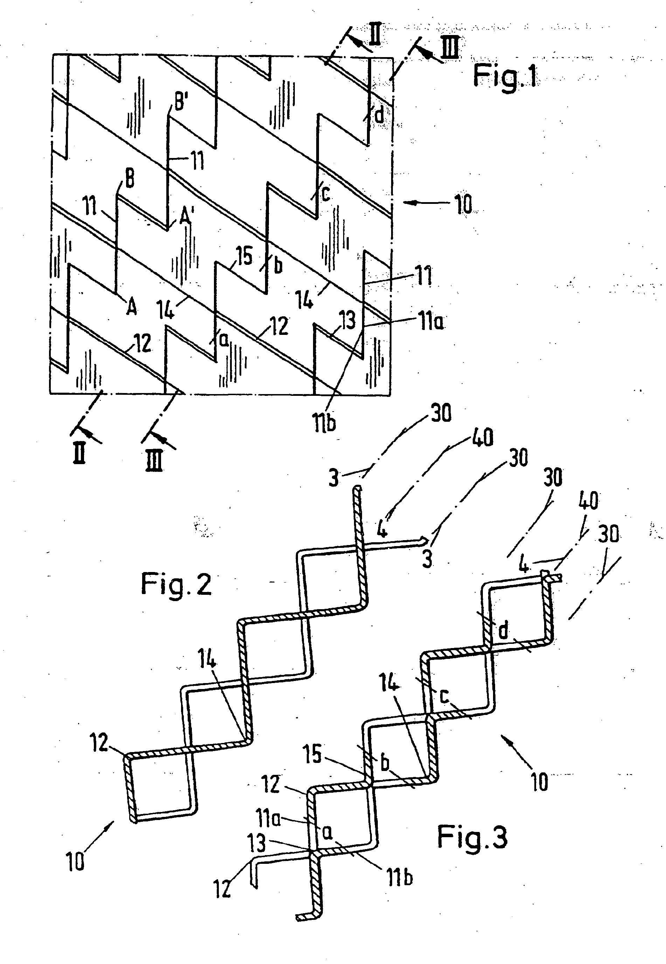

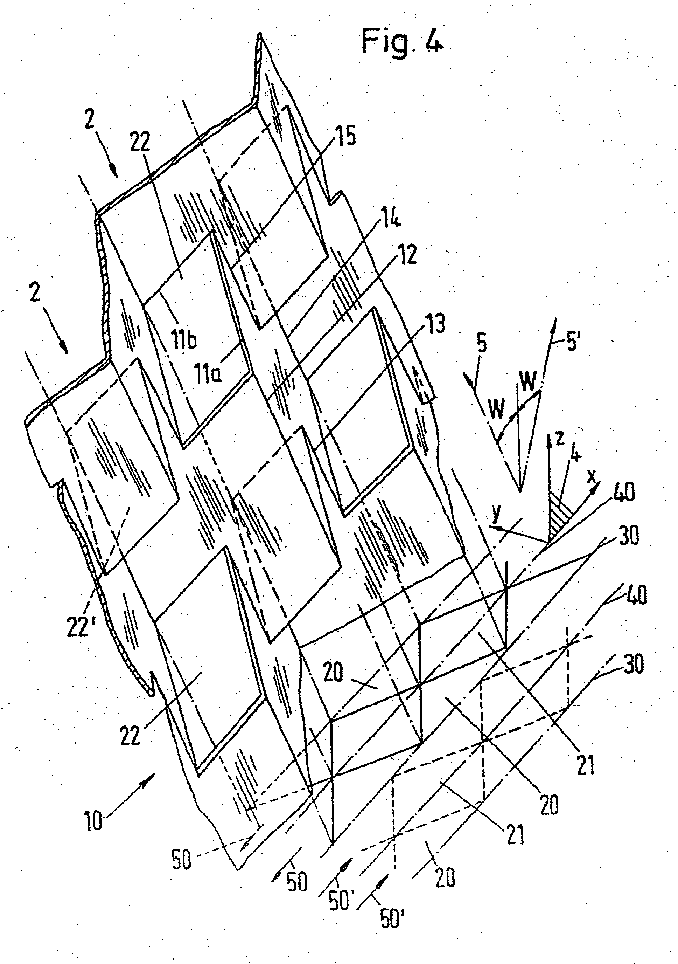

Eine Lage 10 eines erfindungsgemässen Füllkörpers 1 - siehe die Figuren 1, 4 und 11 - ist aus einem rasterartig geschlitzten sowie umgeformten Blech gebildet. Anstelle eines Blechs kann auch eine Folie oder ein Drahtgewebe vorgesehen sein. Schlitze 11 weisen Schlitzkanten 11a und 11b auf, die eine offene Fläche 22 oder 22' (Fig. 4) aufspannen. Die Schlitze 11 haben Endpunkte A, B sowie A', B', die eine Rasterung mit Dreiecken ABA' und BA'B' bilden. Als Material für das Blech (bzw. Folien oder Gewebe) können Metalle, keramische Stoffe und/oder Kunststoffe gewählt werden.

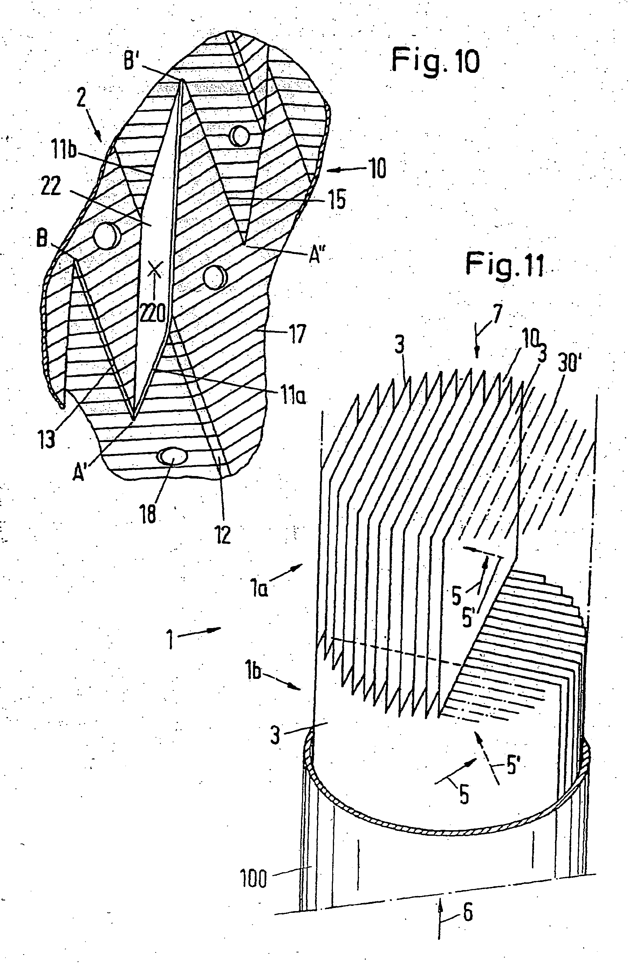

Der Füllkörper 1 ist aus einer Vielzahl von aneinander grenzenden Lagen 10 aufgebaut, in denen jeweils Kanäle 2 parallel zueinander angeordnet sind. Die Kanäle 2 sind bezüglich einer Hauptströmungsrichtung geneigt. Diese Richtung ist parallel zur z-Achse in Fig.4. An Grenzflächen 3 (Fig. 2, 11) zwischen benachbarten Lagen 10 erstrecken sich Kanäle 2, nämlich laterale Kanäle, die in Fig. 4 anhand von in einer x-y-Ebene liegenden Querschnitten identifizierbar sind. Die lateralen Kanäle mit jeweils dreieckigem Querschnitt sind dort mit dem Bezugszeichen 20 bezeichnet. Diese lateralen Kanäle 20 sind gegeneinander offen; sie bilden eine kreuzweise Anordnung. Die Lage 10 enthält zusätzlich zu den lateralen Kanälen 20 zentrale Kanäle 21 mit jeweils viereckigem Querschnitt. Eine materielle Trennung an den Grenzen zwischen den zentralen und lateralen Kanälen 2 ist zu rund einer Hälfte mit regelmässig angeordneten Wandstücken hergestellt; in den Zonen der anderen Hälfte sind die Kanalgrenzen offen.

Die Grenzflächen der Kanäle 2 sind durch kammförmig gefaltete Wandstücke gegeben. Faltkanten oder Kämme 12 und 14 dieser Wandstücke sind reihenweise alternierend auf beiden Seiten einer Zentralebene 4 der Lage 10, nämlich der x-z-Ebene in Fig. 4, angeordnet; sie sind parallel zu dieser Ebene. In der Draufsicht in Fig. 1 liegen die Kämme 12 und 14 vorne bzw. hinten bezüglich der Zeichenebene, die sich parallel zu den Kämmen 12, 14 erstreckt. Weitere Faltkanten 13 und 15 liegen in der Zentralebene 4. Die Richtung 5 der Kanäle 2 schliesst mit der z-Achse (Fig. 4) einen Winkel W ein und zwar auf der linken Seite der z-Achse bei Blick in y-Richtung. Im gezeigten Beispiel schliesst die Kanalrichtung 5' benachbarter Lagen 10 mit der z-Achse ebenfalls den Winkel W ein, jedoch auf der rechten Seite. Dieser Neigungswinkel W ist grösser als 10° und kleiner als 70°. Die Projektion der Kanalrichtungen 5 und 5' in die x-y-Ebene sind in Fig. 4 als Pfeile 50 bzw. 50' angegeben.

Die Figuren 2 und 3 zeigen zwei parallele Querschnitte durch die Lage 10, die den Linien II-II und III-III in Fig. 1 entsprechen. Mit strichpunktierten Geraden 30 und 40 sind die Lagen der Grenzflächen 3 und der Zentralebene 4 angegeben. In Fig. 2 sind nur die an den Grenzflächen 3 liegenden Faltkanten 12 und 14 erkennbar, in Fig. 2 auch die Faltkanten 13 und 15 bei der Zentralebene 4. Der Querschnitt der Fig. 3 schneidet die Schlitze 11 (Kanten 11a, 11b) an den Stellen a, b, c und d.

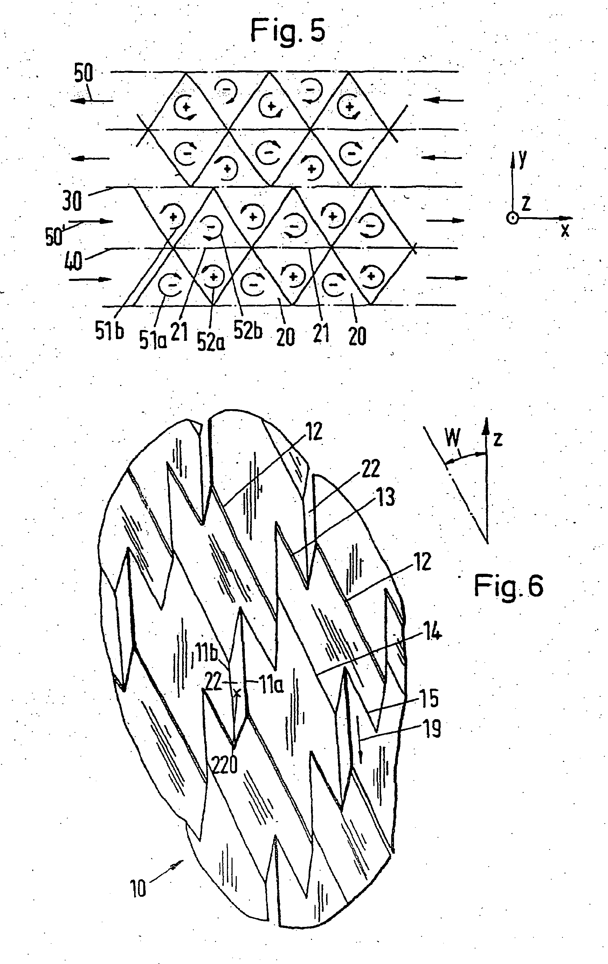

Anhand der Fig. 5, die den in der x-y-Ebene liegenden Querschnitt durch zwei benachbarte Lagen 10 (vgl. Fig.4) zeigt, werden die Strömungsverhältnisse in den lateralen Kanälen 20 und den zentralen Kanälen 21 illustriert. In den lateralen Kanälen 20 werden durch die Wechselwirkung zwischen den Strömungen benachbarter, sich kreuzender Kanäle 2 Wirbel 51a und 51b induziert. Diese primären Wirbel 51a und 51b induzieren sekundäre Wirbelpaare 52a, 52b in den zentralen Kanälen 21.

Die regelmässig angeordneten Wandstücke der Kanäle 2 weisen freie Kanten, nämlich die Schlitzkanten 11a und 11b auf. Mit Vorteil sind sie geradlinig und liegen zumindest angenähert auf Falllinien, d. h. auf Linien, die auf einer vertikalen Ebene liegen (parallel zur z-Achse) und die bezüglich der Oberfläche der Lage 10 so ausgerichtet sind, dass sie senkrecht zu einer Horizontalen auf dieser Oberfläche stehen. Diese vorteilhafte Ausführungsform ist in Fig. 6 dargestellt. Die Richtung der Fallinie ist dort mit einem Pfeil 19 angegeben.

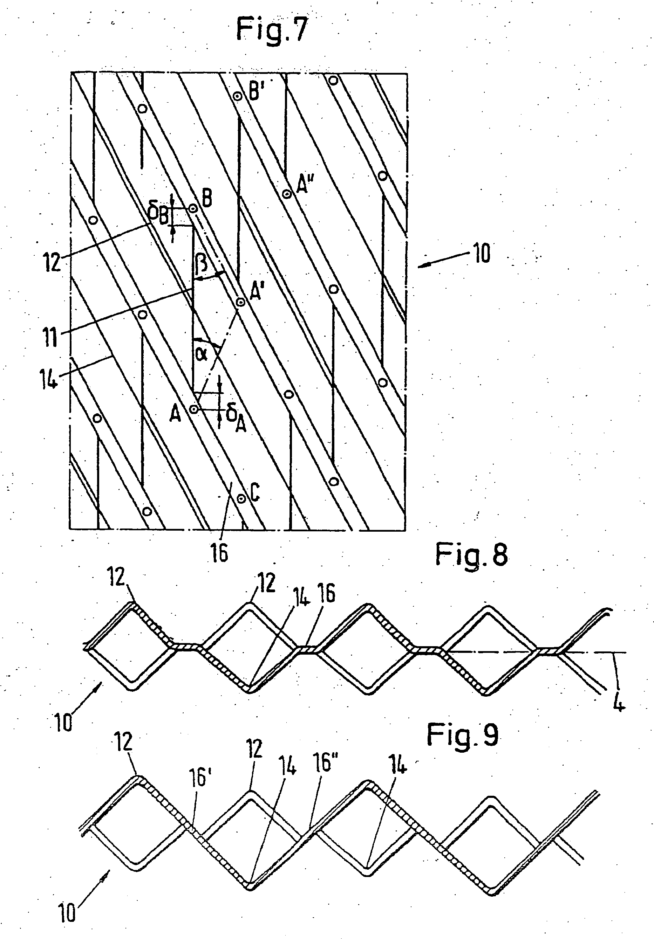

Bei der in Fig. 7 gezeigten Ausführungsform liegt wie bei jener der Fig. 1 eine Dreiecksrasterung vor. Hier enden jedoch die Schlitze 11 in Abstände δ_{A} bzw. δ_{B} von den Eckpunkten A (oder A') und B (oder B'). Aufgrund dieser Abstände ergeben sich durch die Eckpunkte "horizontale" Bänder 16 - siehe Querschnitt in Fig. 8 - anstelle der Faltkanten 13 und 15 in Fig. 1. Unter "horizontal" ist dabei verstanden, dass die Bänder 16 in der Zentralebene 4 liegen. Statt "horizontaler" Bänder 16 können beispielsweise auch geneigte Bänder 16' und 16" vorgesehen sein, wie es in Fig. 9 gezeigt ist.

Die Geometrie einer Lage 10 ist durch den Neigungswinkel W, die Winkel der Faltkanten 12, 14 und die Anordnung der Schlitze 11 charakterisierbar. Die Anordnung der Schlitze 11 lässt sich durch den Abstand zwischen den Eckpunkten A und B, die Abstände δ_{A} und δ_{B} sowie beispielsweise zwei Dreickswinkel α und β (Fig. 7) festlegen.

In Fig. 10 sind zu einer Umgebung der offenen Fläche 22 in Fig. 6, die mit einem Kreuz 220 markiert ist, weitere Details dargestellt, welche die Lage 10 aufweisen kann: die materiellen Grenzen der Kanäle 2, die Kanalwände, sind rilliert, d. h. mit feinen Rinnen strukturiert. Die Rillierung 17 ist quer zu den Falllinien (Kanten 11a, 11b). Die Kanalwände können auch zusätzlich perforiert sein, beispielsweise mit runden Löchern 18. Anstelle einer Rillierung 17 aus lauter parallelen Rinnen kann mit Vorteil auch eine Rillierung vorgesehen sein, wie sie aus der EP-A 0 190 435 (= P.5928) bekannt ist, bei der nämlich eine Oberflächenstrukturierung durch sich kreuzende Rinnen gebildet ist.

Der erfindungsgemässe Füllkörper muss nicht einheitlich aus Lagen des gleichen Typs aufgebaut sein. Es können auch einzelne Lagen aus ungeschlitzten Blechen (bzw. Folien oder Geweben) hergestellt sein, die jeweils eine Wellenform haben, insbesondere zickzackartig gefaltet sind. Bei einem derartigen Aufbau ist es vorteilhaft, wenn die Lagen der verschiedenen Typen in einer regelmässigen Reihenfolge angeordnet sind, also beispielsweise in einer alternierenden Anordnung von a) Lagen mit Blechen des in den Figuren 1 bis 10 dargestellten Typs und b) Lagen aus wellenförmigen, ungeschlitzen Blechen.

Der erfindungsgemässe Füllkörper 1 ist in der Regel aus mehreren, übereinander angeordneten Packungselementen aufgebaut, wobei jedes Element einen Bereich der Packung mit gleich ausgerichteten Lagen bildet und die horizontalen Richtungen der Lagen benachbarter Elemente sich kreuzen. In Fig. 11 ist der strukturelle Aufbau eines derartigen Füllkörpers 1 dargestellt, nämlich mit Grenzflächen 3 von zwei Packungselementen 1a und 1b, die in der zylinderförmigen Wand 100 einer Kolonne oder eines statischen Mischers angeordnet sind. Die strichpunktierten Linien 30' geben die oberen Kanten von nicht dargestellten Grenzflächen 3 an. Die Pfeile 5 und 5' geben die Kanalrichtungen benachbarter Lagen 10 (nicht gezeichnet) an. Die Pfeile 6 und 7 geben Hauptströmungsrichtungen von Fluiden an, die zwecks einer Vermischung und/oder eines Stoffaustausches durch den Füllkörper 1 geleitet werden.

Die Bleche (bzw. Folien oder Gewebe) der Lagen 10 oder auch nur einzelne Wandstücke der Lagen 10 können durch zusätzliche Schlitzbildungen und Umformungen weiter strukturiert sein, so dass beispielsweise kleinere kammförmig gefaltete Wandstücke vorliegen, die ähnlich wie die Wandstücke der Kanäle 2 (vgl. Fig. 4) aber um einiges kleiner als diese ausgebildet sind. Eine Kreuzkanalstruktur mit einer derartigen Feinstrukturierung ist aus der US-A 4 710 326 bekannt.

Die Kanäle 2 sind in allen Ausführungsbeispielen als geradlinige Kanäle dargestellt. Sie können aber auch Richtungsänderungen aufweisen, insbesondere in Randzonen an den oberen und/oder unteren Enden der Packungselemente 1a und 1b in Fig. 11. Bei besonderen Ausführungsformen der Packung sind in den Packungselementen jeweils eine untere Zone, eine mittlere Zone und eine obere Zone unterscheidbar. In den Zonen an den Rändern der Packungselemente kann aufgrund einer geeigneten Formgebung der Strömungswiderstand gegenüber jenem der mittleren Zone reduziert werden. Solche vorteilhaften Ausführungsformen sind aus der WO 97/16247 bekannt.

Die Oberflächen des erfindungsgemässen Füllkörpers können eine Beschichtung mit katalytisch wirksamen Stoffen aufweisen. Solche Füllkörper lassen sich in Kolonnen zur Durchführung von Reaktivdestillationen verwenden oder als Katalysatorträger in Abgaskatalysatoren einsetzen.

## Patentansprüche

1. Füllkörper (1) mit Kreuzkanalstruktur, für eine Packungskolonne oder eine statische Mischeinrichtung, welcher Füllkörper aus aneinander grenzenden Lagen (10) aufgebaut ist, in denen jeweils Kanäle (2) parallel zueinander angeordnet sind, wobei
a) an Grenzflächen (3) zwischen benachbarten Lagen sich laterale Kanäle (20) erstrecken, die gegeneinander offen sind, und diese lateralen Kanäle eine kreuzweise Anordnung bilden,
b) zumindest ein Teil der Lagen (10) zusätzlich zu den lateralen Kanälen (20) jeweils zentrale Kanäle (21) enthalten,
c) eine materielle Trennung an den Grenzen zwischen den zentralen und lateralen Kanälen zu rund einer Hälfte mit regelmässig angeordneten Wandstücken hergestellt ist,
d) die Kanalgrenzen in den Zonen der anderen Hälfte offen sind,
e) die Lagen (10) jeweils aus einem rasterartig geschlitzten sowie umgeformten Blech gebildet sind,
f) die Kanalgrenzen durch kammförmig gefaltete Wandstücke gegeben sind,
g) die Kämme (12, 14) dieser Wandstücke reihenweise alternierend auf beiden Seiten einer Zentralebene (4) der Lage und parallel zu dieser Ebene angeordnet sind und
h) Schlitze (11) Schlitzkanten (11a, 11b) aufweisen, die offene Flächen (22, 22') aufspannen,
**dadurch gekennzeichnet, dass** die regelmässig angeordneten Wandstücke freie Kanten (11a, 11b) aufweisen, die geradlinig sind und die zumindest angenähert auf Falllinien liegen, d. h. auf Linien, die auf einer vertikalen Ebene liegen und deren Richtung senkrecht zu einer Horizontalen auf der Oberfläche ist.

2. Füllkörper nach Anspruch 1, **dadurch gekennzeichnet, dass** anstelle des Blechs auch eine Folie oder ein Drahtgewebe vorgesehen sein kann und für das Material des Blechs bzw. der Folie oder des Gewebes Metalle, keramische Stoffe und/oder Kunststoffe gewählt werden können.

3. Füllkörper nach Anspruch 1 oder 2, **dadurch gekennzeichnet, dass** einzelne Wandstücke durch zusätzliche Schlitzbildungen und Umformungen weiter strukturiert sind, insbesondere eine Feinstrukturierung aufweisen.

4. Füllkörper nach einem der Ansprüche 1 bis 3, **dadurch gekennzeichnet, dass** alle Kanäle zu einer Hauptströmungsrichtung (6, 7) geneigt sind und dass die Neigungswinkel (W) bezüglich der Hauptströmungsrichtung grösser als 10° und kleiner als 70° sind, wobei insbesondere die sich kreuzenden Kanäle (2) benachbarter Lagen (10), die bezüglich der Hauptströmungsrichtung entgegengesetzt geneigt sind, Neigungswinkel haben, die betragsmässig weitgehend gleich gross sind.

5. Füllkörper nach einem der Ansprüche 1 bis 4, **dadurch gekennzeichnet, dass** die Kanalwände rilliert sind oder eine andere Strukturierung aufweisen und/oder dass die Kanalwände zusätzlich perforiert sind, beispielsweise mit runden Löchern (18).

6. Füllkörper nach einem der Ansprüche 1 bis 5, **dadurch gekennzeichnet, dass** einzelne, regelmässig angeordnete Lagen aus ungeschlitzten Blechen bzw. Folien oder Geweben hergestellt sind, die jeweils eine Wellenform haben, insbesondere zickzackartig gefaltet sind.

7. Kolonne mit einem Füllkörper (1) gemäss einem der Ansprüche 1 bis 6 als Packung für einen Stoff- und/oder Wärmetausch zwischen einerseits einem Rieselfilm auf Oberflächen der Packung und andererseits einem Gasstrom, der eine Vielzahl von durch die Packungsoberflächen gebildeten Kanälen (2) durchströmt, wobei die Oberflächen der Packung eine Beschichtung mit katalytisch wirksamen Stoffen aufweisen können.

8. Kolonne nach Anspruch 7, **dadurch gekennzeichnet, dass** der Füllkörper (1) aus mehreren, übereinander angeordneten Packungselementen (1a, 1b) aufgebaut ist, jedes Element einen Bereich der Packung mit gleich ausgerichteten Lagen (10) bildet und die horizontalen Richtungen der Lagen benachbarter Elemente sich kreuzen.

9. Mischeinrichtung mit einem Rohr (100) und einer im Rohr angeordneten statischen Mischerstruktur (1) in Form eines Füllkörpers gemäss einem der Ansprüche 1 bis 6, für eine Durchmischung von fliessfähigen Stoffen, die das Rohr in gleicher Richtung (6 oder 7) durchströmen, wobei die Oberflächen der Mischerstruktur eine Beschichtung mit katalytisch wirksamen Stoffen aufweisen können.

## Claims

1. Filler body (1) with a cross channel structure for a packing column or a static mixer apparatus, said filler body being built up of layers (10) which border on one another, in which in each case channels (2) are arranged parallel to one another,
a) with lateral channels (20) which are open to one another extending at boundary surfaces (3) between adjacent layers and with these lateral channels forming a cross-wise arrangement,
b) at least a portion of the layers (10) in each case contain central channels (21) in addition to the lateral channels (20),
c) with a material separation at the boundaries between the central and the lateral channels being produced in about one half of the cases by regularly arranged wall sections,
d) the channel boundaries in the zones of the other half being open,
e) the layers (10) are in each case formed of a sheet metal lamina which is slit in a grid-like manner and deformed,
f) with the channel boundaries being given by wall sections which are folded in the manner of a comb
g) with the combs (12, 14) of these wall sections being arranged row-wise alternatingly on both sides of a central plane (4) of the layer and parallel to this plane,
h) slits (11) having slit edges (11a, 11b) which span an open surface (22, 22'),
**characterised in that** the regularly arranged wall sections have free edges (11a, 11b) which are rectilinear and lie at least approximately on fall lines, i.e. on lines which lie in a vertical plane and the direction of which is perpendicular to a horizontal line on the surface.

2. Filler body in accordance with claim 1 **characterised in that** it is possible to provide instead of the sheet metal lamina a film or a wire mesh and to choose metals, ceramic materials and/or plastics for the material of the sheet metal lamina or, respectively, of the film or the mesh.

3. Filler body in accordance with claim 1 or claim 2 **characterised in that** individual wall sections are further structured through additional slit formations and deformations, and in particular have a fine structuring.

4. Filler body in accordance with any one of the claims 1 to 3 **characterised in that** all channels are inclined with respect to a main flow direction (6, 7); and **in that** the angles of inclination (W) with respect to the main flow direction are greater than 10° and less than 70°, with in particular the mutually crossing channels (2) of adjacent layers (10), which are inclined oppositely with respect to the main flow direction, having angles of inclination which are largely equal in magnitude.

5. Filler body in accordance with any one of the claims 1 to 4 **characterised in that** the channel walls are grooved or have another structuring; and/or **in that** the channel walls are additionally perforated, for example with round holes (18).

6. Filler body in accordance with any one of the claims 1 to 5 **characterised in that** individual, regularly arranged layers are manufactured of unslit sheet metal lamina or, respectively, films or meshes which in each case have a wave shape, in particular are folded in zigzag shape.

7. Column with a filler body (1) in accordance with any one of the claims 1 to 6 as a packing for a material and/or heat exchange between, on the one hand, a ripple film on surfaces of the packing and, on the other hand, a gas flow which flows through a large number of channels (2) which are formed by the packing surfaces, with it being possible for the surfaces of the packing to have a coating with catalytically active substances.

8. Column in accordance with claim 7, **characterised in that** the filler body (1) is built up of a plurality of packing elements (1a, 1b) which are arranged one above the other; **in that** each element forms a region of the packing with similarly oriented layers (10) ; and **in that** the horizontal directions of the layers of adjacent elements cross one another.

9. Mixer apparatus comprising a tube (100) and a static mixer structure (1) in the form of a filler body in accordance with any one of the claims 1 to 6 which is arranged in the tube, for a mixing through of flowable substances which flow through the tube in the same direction (6 or 7), with it being possible for the surfaces of the mixer structure to have a coating with catalytically active substances.

## Revendications

1. Corps de remplissage (1) d'une structure à canaux croisés, pour une colonne de garnissage ou une installation de mélange statique, ce corps de remplissage étant constitué de couches avoisinantes (10), dans lesquelles sont disposés respectivement des canaux (2) parallèlement les uns aux autres, a) où à des faces limites (3) entre des couches avoisinantes, des canaux latéraux (20) s'étendent qui sont ouverts les uns contre les autres, et ces canaux latéraux forment un agencement en croix,
b) où au moins une partie des couches (10) comporte additionnellement aux canaux latéraux (20) respectivement des canaux centraux (21),
c) où une séparation matérielle aux limites entre les canaux centraux et latéraux est réalisée à peu près pour moitié avec des pièces de paroi disposées régulièrement,
d) où les limites de canaux dans les zones de l'autre moitié sont ouvertes
e) où les couches (10) sont réalisées respectivement en une tôle fendue en forme de trame et déformée,
f) où les limites des canaux sont fournies par des pièces de paroi pliées en forme de peigne
g) où les peignes (12, 14) de ces pièces de paroi sont disposés en rangées alternativement sur les deux côtés d'un plan central (4) de la couche et parallèlement à ce plan,
h) où les fentes (11) présentent des arêtes de fente (11a, 11b) qui forment des faces ouvertes (22, 22') **caractérisé en ce que** les pièces de paroi disposées régulièrement présentent des arêtes libres (11a, 11b) qui sont rectilignes et qui se situent au moins approximativement sur des lignes de plus grande pente, c'est-à-dire sur des lignes qui se situent sur un plan vertical et dont la direction est perpendiculaire à une ligne horizontale sur la surface.

2. Corps de remplissage selon la revendication 1, **caractérisé en ce**, où à la place de la tôle, également une feuille ou un tissu en fil métallique peut être prévu, et pour le matériau de la tôle respectivement de la feuille ou du tissu, des métaux, des matériaux céramiques et/ou des matériaux synthétiques peuvent être sélectionnés.

3. Corps de remplissage selon la revendication 1 ou 2, **caractérisé en ce que** des pièces de paroi individuelles sont structurées davantage par des formations additionnelles de fentes et des déformations, en présentant en particulier une structuration fine.

4. Corps de remplissage selon l'une des revendications 1 à 3, **caractérisé en ce que** tous les canaux sont inclinés dans une direction d'écoulement principale (6, 7), et **en ce que** les angles d'inclinaison (W) par rapport à la direction d'écoulement principale sont plus grands que 10° et plus petits que 70°, où en particulier les canaux (2) qui se croisent de couches avoisinantes (10), qui sont inclinés par rapport à la direction d'écoulement principale d'une manière opposée, présentent des angles d'inclinaison qui, en ce qui concerne la valeur, sont sensiblement de même grandeur.

5. Corps de remplissage selon l'une des revendications 1 à 4, **caractérisé en ce que** les parois des canaux sont rainurées ou présentent une autre structuration et/ou **en ce que** les parois des canaux sont perforées additionnellement, par exemple avec des trous ronds (18).

6. Corps de remplissage selon l'une des revendications 1 à 5, **caractérisé en ce que** des couches individuelles, disposées régulièrement, sont fabriquées en des tôles non fendues respectivement feuilles ou tissus, qui ont respectivement une forme ondulée, qui sont notamment pliées en zigzag.

7. Colonne avec un corps de remplissage (1) selon l'une des revendications 1 à 6 comme garnissage pour un échange de matière et/ou de chaleur entre, d'une part, un film ruisselant sur des surfaces du garnissage et, d'autre part, un flux de gaz qui traverse une multitude de canaux (2) formés sur les surfaces du garnissage, où les surfaces du garnissage peuvent présenter un revêtement de matériau catalytiquement actif.

8. Colonne selon la revendication 7, **caractérisée en ce que** le corps de remplissage (1) est constitué de plusieurs éléments de garnissage superposés (1a, 1b), chaque élément forme une zone du garnissage avec des couches (10) orientées de la même manière, et les directions horizontales des couches d'éléments avoisinants se croisent.

9. Installation de mélange avec un tuyau (100) et une structure de mélange statique (1) disposée dans le tuyau sous la forme d'un corps de remplissage selon l'une des revendications 1 à 6, pour un mélange de matériaux coulants, qui traversent le tuyau dans la même direction (6
ou 7), où les surfaces de la structure de mélange peuvent présenter un revêtement en matériaux catalytiquement actifs.
